# EUROPEAN PATENT SPECIFICATION

(11) **EP 4 432 513 B1**
(45) Date of publication and mention of the grant of the patent: **23.09.2026**
(21) Application number: 23891859.3
(22) Date of filing: 26.10.2023
(51) Int. Cl.: H02J 7/00, H01M 10/44, H01M 10/42

(54) **BATTERY MANAGEMENT DEVICE, BATTERY PACK, AND BATTERY PACK CHARGING CONTROL METHOD**
BATTERIEVERWALTUNGSVORRICHTUNG, BATTERIEPACK UND BATTERIEPACKLADESTEUERUNGSVERFAHREN
DISPOSITIF DE GESTION DE BATTERIE, BLOC-BATTERIE ET PROCÉDÉ DE COMMANDE DE CHARGE DE BLOC-BATTERIE

(30) Priority: 18.11.2022 KR 20220155029
(43) Date of publication of application: 18.09.2024
(73) Proprietor: LG Energy Solution, Ltd., Seoul 07335 (KR)
(72) Inventor: KIM, Jun Suk, Daejeon 34122 (KR); SONG, Keehoon, Daejeon 34122 (KR)
(74) Representative: Plasseraud IP
(86) International application number: PCT/KR2023/016701
(87) International publication number: WO 2024/106792

(56) References cited:
- EP-A1- 3 829 024
- KR-A- 20200 101 174
- KR-A- 20210 040 123
- KR-A- 20220 056 030
- KR-A- 20220 105 895
- US-A1- 2019 372 359
- US-A1- 2020 266 499

## Description

### [Cross Reference to Related Applications]

This application claims priority to and the benefit of Korean Patent Application No.10-2022-0155029 filed in the Korean Intellectual Property Office on November 18.

### [Technical Field]

The present invention relates to a battery management apparatus, a battery pack and a charge control method of a battery pack, and more particularly, to a battery management apparatus, a battery pack and a charge control method of a battery pack, which controls charging by considering cell balancing in a battery pack including a plurality of battery cells.

### [Background Art]

Secondary batteries, capable of recharging and reuse, are manufactured as battery modules or packs by connecting multiple battery cells in series based on the required output capacity, serving as power sources for diverse applications. These batteries are used in small, high-tech electronic devices like smartphones, as well as a variety of fields including electric bicycles, electric vehicles, and energy storage systems (ESS).

A battery module or pack, including multiple battery cells, faces safety and operational efficiency issues if certain cells encounter overvoltage, overcurrent, or overheating, thereby necessitating the need for a detection means. Therefore, the battery module or battery pack is equipped with a battery management system (BMS) that measures voltage values of respective battery cells and monitors and controls voltage status of the battery cells based on the measured values.

Meanwhile, voltage differences between battery cells occur due to various factors and cell balancing by the battery management system may reduce these differences. However, cell balancing has a capacity limitation due to hardware limitations and problems, such as battery being unusable, may occur when the voltage deviation among cells exceeds the cell balancing capacity.

Document US 2020/266499 and EP 3 829 024 A1 disclose a method of controlling a plurality of batteries of the related art.

### [Detailed Description of the Invention]

### [Technical Problem]

To obviate one or more problems of the related art, embodiments of the present disclosure provide a battery pack in which cell balancing is maintained as much as possible through charge control.

To obviate one or more problems of the related art, embodiments of the present disclosure also provide a battery management apparatus which performs charge control to maintain cell balancing as much as possible.

To obviate one or more problems of the related art, embodiments of the present disclosure also provide a charge control method for a battery pack by which cell balancing is maintained as much as possible through charge control.

### [Technical Solution]

In order to achieve the objective of the present disclosure, a battery pack is defined in the appended claims.

According to another embodiment of the present disclosure, a battery management apparatus, for a battery pack including a plurality of battery cells connected in series, is also provided.

According to another embodiment of the present disclosure, a charge control method of a battery pack, including a plurality of battery cells connected in series, is provided.

### [Advantageous Effects]

According to the above-described embodiment of the present invention, when voltage deviations among cells connected in series occur, the charging current is controlled so that cell balancing can be maintained as much as possible and the voltage deviations among cells can be reduced as much as possible within the charging cycle at a level that does not cause a problem for a user to use the system.

Thus, the present invention allows the battery pack to supply more energy to the system by reducing the voltage difference among cells.

### [Brief Description of theDrawings]

FIG. 1 shows a structure of a battery pack to which the present invention may be applied.
FIG. 2 shows an operational flow of a general cell balancing control method.
FIG. 3 is a block diagram of a battery management apparatus according to embodiments of the present invention.
FIG. 4 shows operational flowchart of a charge control method of a battery pack according to embodiments of the present invention.
FIG. 5 is a diagram illustrating charge control activation conditions according to embodiments of the present invention and an example of operation of the battery management apparatus.
FIG. 6 is a graph showing charging and cell balancing results when the charge control according to the present invention is not applied.
FIG. 7 is a graph showing charging and cell balancing results when charge control according to embodiments of the present invention is applied.

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the scope of the claims. Like reference numerals refer to like elements throughout the description of the figures.

**It** will be understood that, although the terms such as first, second, A, **B,** and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

**It** will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms **"a", "an"** and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

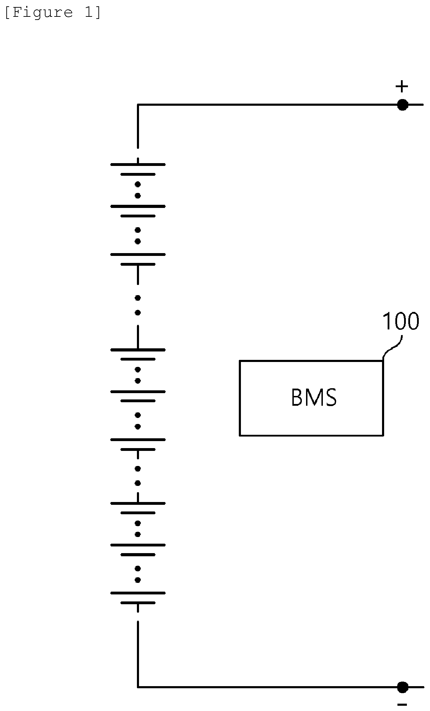

**FIG.** 1 shows a structure of a battery pack to which the present invention may be applied.

A battery pack (or battery module) in **FIG.** 1 may include a plurality of battery cells connected in series. The most commonly used battery cells are lithium-ion (Li-Ion) battery cells. The battery pack may be connected to a load through a positive and a negative terminals and perform charging/discharging operation. A battery pack may be configured to be connected in series/parallel depending on requirements of the system in which the battery is applied.

A battery management system (BMS) 100 may be installed for each of the battery packs. The battery management system (BMS) may monitor a current, a voltage, and a temperature of each battery pack to manage, calculate a state of charge (SOC) based on the monitoring results, and control charging and discharging. Here, the SOC refers to a current charged state of a battery, represented in percent points [%]. Meanwhile, state of health (SOH) may be an indicator of current state as to degree of battery aging, represented in percent points [%].

In addition, the battery management system may monitor battery cells, read cell voltages, and transmit them to other systems connected to the battery. For this, the BMS may include a communication module for communicating with other systems in a device including the battery system. The communication module of the BMS may communicate with other systems using controller area network (CAN) or Ethernet. When using CAN communication, components, modules or systems in the BMS may be connected to one another through a CAN bus.

The controller area network (CAN)communication is a standard communication standard designed to allow microcontrollers or devices to communicate with each other in a vehicle without a host computer. The CAN communication is a non-host bus message-based network protocol which is mainly used for communication between controllers and often used in vehicles.

Furthermore, the battery management system balances the charge of the battery cells evenly to extend the life of the battery pack. To perform such operations, the battery management system100 may include various components such as fuses, current sensing elements, thermistors, switches, and balancers, and further include an MCU (Micro Controller Unit) or BMIC (Battery Monitoring Integrated Chip) to interface with and control these components in most cases. Here, the BMIC may be located inside the BMS and may be an IC-type component that measures information such as voltage, temperature, and current of the battery cell/pack.

Meanwhile, battery cells included in a battery pack may not have completely identical characteristics, and voltage differences may occur between cells connected in series due to natural discharge of each cell, environmental factors during use, etc.

However, the battery management system 100 has a cell balancing (CB) function using passive balancing which may be performed during charging, but the cell balancing capacity is limited by hardware. For example, the cell balancing capacity that can be provided may be limited due to limitations in the wattage, resistance value, and thermal durability of the cell balancing circuit.

As an extreme example, when using a battery pack, the voltage deviation (or capacity deviation due to voltage deviation) that occurs during one cycle may exceed the cell balancing capability and the voltage deviation may continue increasing over time, thereby the battery reaching a Permanent Fail (PF) state.

As another example, the voltage deviations that occur among battery cells in a battery pack may mean that a certain cell cannot use an amount of energy corresponding to the deviation. In particular, the end voltage of a cell with a small capacity decreases rapidly at the end of discharging, the battery pack reaches the under voltage protection (UVP) mode, and thus, a problem may occur in which even cells with remaining capacity cannot consume their remaining energy.

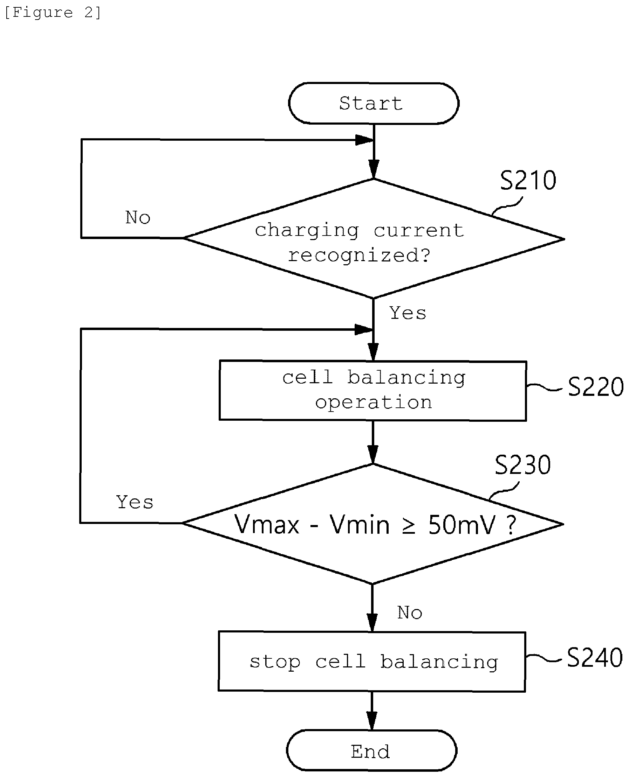

**FIG.** 2 shows an operational flow of a general cell balancing control method.

A passive cell balancing function included in a BMS is generally achieved in such a way that a balancing circuit including a switch (for example, a transistor) and a resistor is placed for each cell and a control unit controls the balancing circuit.

The general cell balancing operation (S220) is initiated when charging begins and the BMS recognizes the charging current (S210). The cell balancing operation (S220) is maintained when the maximum voltage difference among cells is above a certain value (Yes at S230) and the cell balancing operation (S220) is stopped (S240) when the voltage deviation among cells is reduced below the certain value (No at S230). For example, as shown in **FIG.** 2, when the difference between the highest and lowest voltages among the measured cell voltages (Cell Voltage max - Cell Voltage min) is 50 mV or more, the cell balancing operation can be maintained.

According to the general cell balancing operation, for example, when charging at 0.3 C-rate according to the cell standard charging conditions, if the time required for the SOC to start from 0 and be fully charged to 100% is calculated as 3.8 hours, the balancing operation can only be performed for 3.8 hours even if the cell balancing continues to operate during charging. In other words, it is impossible to balance cells for a time longer than a hardware-designed value in one charging cycle.

In other words, the general cell balancing control method is a matter of controlling whether to activate or stop cell balancing, but is irrelevant to charge control and charge rate adjustment. In other words, in the general charging and cell balancing method, charging proceeds at a fixed charge rate (C-rate: current rate) during which cell balancing is performed and maintenance time of the cell balancing is also fixed according to the charge rate. Here, the charge rate (C-rate) is a value that represents a speed at which the battery is charged or discharged, and is also called the charge/discharge rate. The unit of charge rate is C, which means capacity. The charge rate (C-rate) is the charge/discharge current (A) divided by the rated capacity of the battery (Ah) and the standard value is 1C.

In relation to the problem stated above, the purpose of the present invention is to check voltage deviation above a set SOC, to calculate operation time of cell balancing required for the voltage deviation, and to perform charge control to limit charging current so as to increase cell balancing operation time.

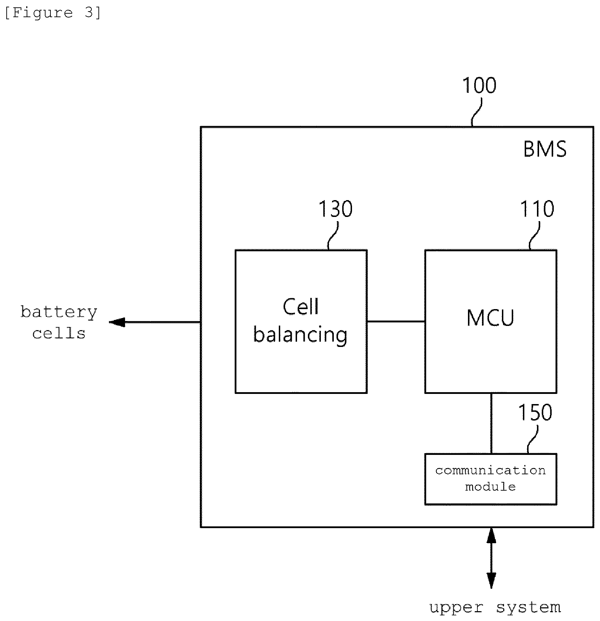

**FIG.** 3 is a block diagram of a battery management apparatus according to embodiments of the present invention.

Referring to **FIG.** 3, the battery management apparatus 100 according to embodiments of the present invention may include a control unit (MCU; Micro Control Unit) 110, a cell balancing module 130, and a communication module 150. In this specification, the control unit may be referred to as a processor, a controller, an MCU, etc., and may refer to a dedicated processor on which methods according to embodiments of the present invention are performed.

The battery management apparatus 100 according to embodiments of the present invention may further include a memory configured to store at least one instruction executed by the at least one processor, and the at least one instruction may include an instruction to check whether the battery pack is charging and the cell balancing module has started operating; an instruction to check whether the time is within a charge control activation time range in the instance that the cell balancing module is operating; an instruction to check whether the state of charge of the battery pack is equal to or greater than a preset threshold in the instance that the cell balancing module is operating; and an instruction to perform charging by limiting charge current of the battery pack, depending on whether the time falls within the charge control activation time range and whether the state of charge of the battery pack is equal to or greater than a preset threshold.

The instruction to perform charging by limiting charge current of the battery pack may include an instruction to perform charging by limiting the charge current of the battery pack when the time falls within the charge control activation time range and the state of the charge of the battery pack is equal to or greater than the preset threshold.

Here, the charge control activation time range is determined as a time range which has a high probability that a system to which the battery pack is applied will not be used.

Meanwhile, the at least one instruction may further include an instruction to proceed with existing charging process without limiting the charge current for the battery pack in the instance that the time does not fall within the charge control activation time range or the state of charge of the battery pack is less than the preset threshold.

In addition, newly applied charging speed according to the limited charge current may be determined by calculating time during which the cell balancing module needs to operate in consideration of voltage deviations among cells.

The cell balancing module 130 may be configured to include a resistor and a switch disposed in each cell. The communication module 150 may communicate with other control devices or other components in the system using CAN (Controller Area Network) or Ethernet. Although not shown in FIG. 3, the battery management apparatus 100 may further include a battery monitoring integrated chip (BMIC).

The battery management apparatus 100 according to embodiments of the present invention may reduce the conventional inherent limitations of the cell balancing module 130 due to hardware factors such as wattage, resistance value, and thermal durability through charge control, thereby improving energy utilization efficiency.

To implement this, the control unit 110 in the battery management apparatus 100 may check whether the cell balancing module 130 is operating, and upon the cell balancing module 130 being operating, may check whether the time falls within the charge control activation time range and whether the charge state of the battery pack is above a predetermined threshold. If the time falls within the charge control activation time range and the state of charge of the battery pack is above the preset threshold, the control unit 110 may perform charging by limiting the charging current of the battery pack.

Meanwhile, the battery management apparatus 100 may measure cell voltages in real time according to a task cycle and check whether the deviation among cell voltage values exceeds a preset reference value. When the voltage deviation exceeding the preset reference value occurs, the cell balancing module 130 operates. In the instance that charging is being performed and the cell balancing module is operating and that it is determined that charging current limitation is necessary, the battery management apparatus 100 may identify the capacity (mAh) corresponding to the voltage deviation. The battery management apparatus may calculate the time required for cell balancing to resolve the identified capacity deviation and limit the charging current according to the calculated time, which means that the battery management apparatus may reset the charging speed.

The embodiments of the present invention may control the charging speed by limiting the charging current according to the time required for cell balancing, and thus, the state of charge (condition in which cell balancing can be operated) can be extended and the time during which cell balancing is operated can also be extended accordingly.

Meanwhile, a user may determine a range of SOC, which is one of the charge control activation conditions according to the present invention. The reason for activating charge control according to the present invention only within a set SOC range is to ensure minimum energy required when the system suddenly needs to be used. For example, if the charge control according to embodiments of the present invention is set to operate only when SOC is 80% or higher, at least SOC 80% can be used even if the system is suddenly used during charge control.

In addition, a user may set the charge control activation time range, that is, the activation time zone, which is another one of the charge control activation conditions according to embodiments of the present invention. This is to ensure that the charge control according to the present invention operates only within a permitted activation time (a time period when a user is predicted or expected not to use the system), so that there is no inconvenience in using the system due to application of the charge control.

The charge control according to embodiments of the present invention may be performed for each task and may continue within the operating conditions until the voltage deviation level falls below a set reference or until a user starts using the system.

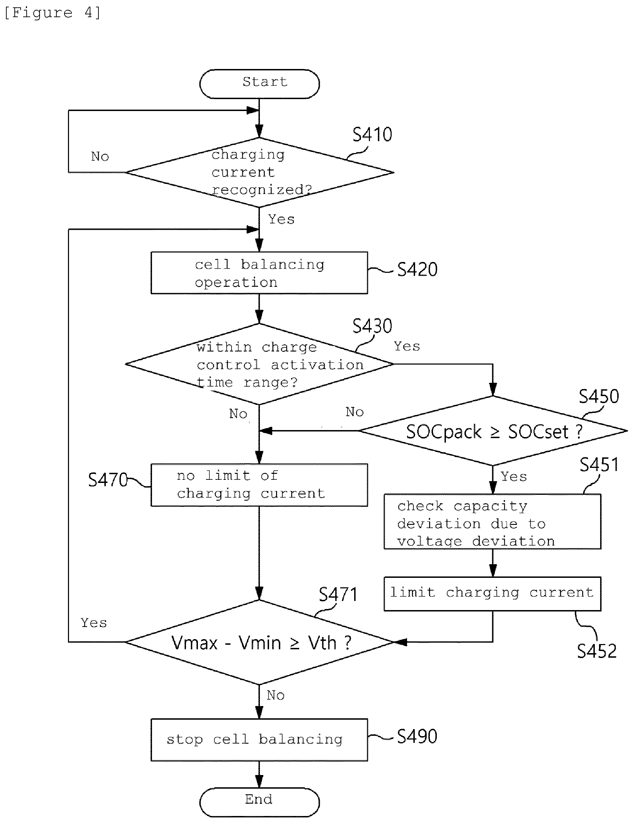

**FIG.** 4 shows operational flowchart of a charge control method of a battery pack according to embodiments of the present invention.

The charge control method of the battery pack shown in **FIG.** 4 may be performed by a battery management apparatus or a controller within the battery management apparatus.

When the battery management apparatus detects that charging has begun through recognizing charging current (S410), the battery management apparatus may initiate a cell balancing operation (S420).

In the charge control method according to embodiments of the present invention, two conditions need to be checked to activate charge control. First, if the cell balancing module is operating, whether the time falls within the charge control activation time range needs to be checked (S430). In addition, it is checked whether a state of charge (SOC_{pack}) of the battery pack is equal to or greater than a preset threshold (SOCₛₑₜ) (S450).

If the time falls within the charge control activation time range (Yes in S430) and the state of charge of the battery pack is equal to or greater than the preset threshold (Yes in S450), the battery management apparatus may check the capacity deviation due to the voltage deviation among cells (S451) and perform charging by limiting the charging current of the battery pack (S452).

Meanwhile, if the time is not within the charge control activation time range (No in S430) or the state of charge of the battery pack is less than the preset threshold (No in S450), the existing charging process is performed without limiting the charging current for the battery pack (S470).

The cell balancing operation may be maintained (S420) when the maximum voltage difference among cells (Vmax - Vmin) is equal to or greater than the threshold (Vth) (Yes in S471) and the cell balancing operation may be stopped (S490) when the maximum voltage difference among cells is reduced below the threshold (No in S471). For example, if the difference between the highest voltage and lowest voltage among the measured cell voltages (Cell Voltage max - Cell Voltage min) is 20 mV (threshold (Vth)) or more, the cell balancing operation may be maintained.

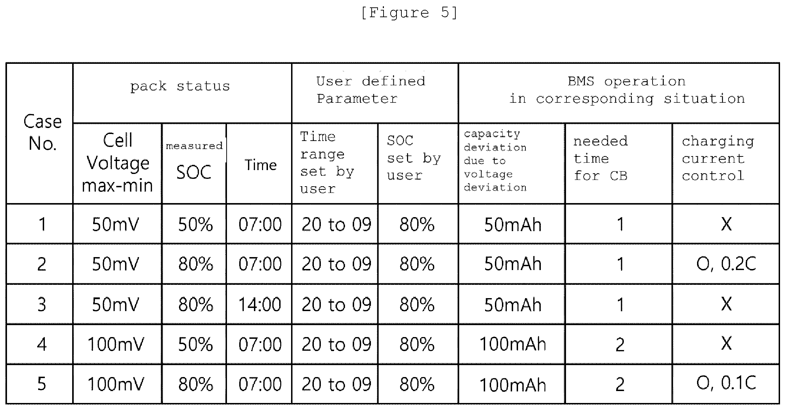

**FIG.** 5 is a diagram illustrating charge control activation conditions according to embodiments of the present invention and an example of operation of the battery management apparatus.

In the example of FIG. 5, the cell balancing capacity is assumed to be 50 mAh, and the capacity deviation and current control according to the voltage difference are arbitrarily set values for illustrative purposes. In the table of FIG. 5, various cases according to pack status and user-set parameters are shown with case numbers 1 to 5, and the table shows whether the charge control is applied for each case and the charge rate for each case when charge control is applied.

The pack status includes information about the maximum voltage difference among cells, the SOC measured at corresponding time, and the time thereof. The user-set parameters include a charge control activation time range set by a user and the minimum SOC value to which the charge control set by the user is applied. In the example of FIG. 5, for all five cases, the user-set charge control activation time range is from 20:00 to 9:00 and the minimum SOC of the pack set by the user is all set to the same value of 80%.

In more detail, in case 1, the maximum voltage difference among cells is 50mV and the measured SOC of the battery pack is 50%, in which the SOC of the battery pack does not reach the threshold of 80%, and thus, charge control according to the present invention may not performed.

In case 2, the maximum voltage difference among cells is 50mV and the measured SOC of the battery pack is 80%, in which the SOC of the battery pack has reached the threshold of 80%, and the time is 7 AM which is within the charge control activation time range. Accordingly, charge control according to embodiments of the present invention may be performed. Here, considering the capacity deviation of 50 mAh and the maximum voltage difference among cells of 50 mV, the time required for the cell balancing operation may be calculated as 1, and the charge rate at this time can be set to 0.2 **C.**

In case 3, the maximum voltage difference among cells is 50mV and the measured SOC of the battery pack is 80%, but the time is 2 PM which does not fall within the charge control activation time range, and thus, charge control according to embodiments of the present invention may not performed.

In case 4, the maximum voltage difference among cells is 100mV and the measured SOC of the battery pack is 50%, in which the SOC of the battery pack does not reach the threshold of 80%, and thus, charge control according to the present invention may not be performed.

In case 5, the maximum voltage difference among cells is 100 mV, the measured SOC of the battery pack is 80%, and the time is 7 am, which falls within the charge control activation time range, and thus, charge control according to the present invention may be performed. Here, considering the capacity deviation of 50 mAh and the maximum voltage difference among cells of 100 mV, the time required for the cell balancing operation can be calculated as 2, and the corresponding charge rate can be set to 0.1 C.

Meanwhile, the charging current control value according to the time required for the cell balancing operation shown in FIG. 5 is just an arbitrary value and may be optimized through testing.

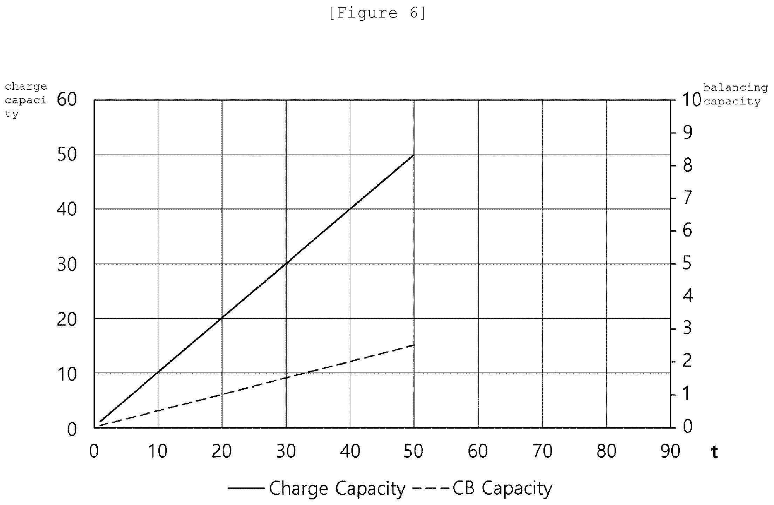

FIG. 6 is a graph showing charging and cell balancing results when the charge control according to the present invention is not applied.

In FIG. 6, the horizontal axis represents time, the left vertical axis represents charge capacity, and the right vertical axis represents cell balancing capacity.

The battery pack to which the test in FIG. 6 is applied is assumed to be a pack with a fairly large imbalance between cells. In addition, it is assumed that the standard charge rate is 1 charging capacity per 1 time unit and 100% charging is equivalent to charging up to capacity 50. Assuming that cell balancing of 0.05 takes place during 1 time unit, it can be understood that a total capacity of 2.5 is balanced during charging is performed. Meanwhile, in this example, the increase in charging time which is caused from capacity reduction due to the balancing is ignored.

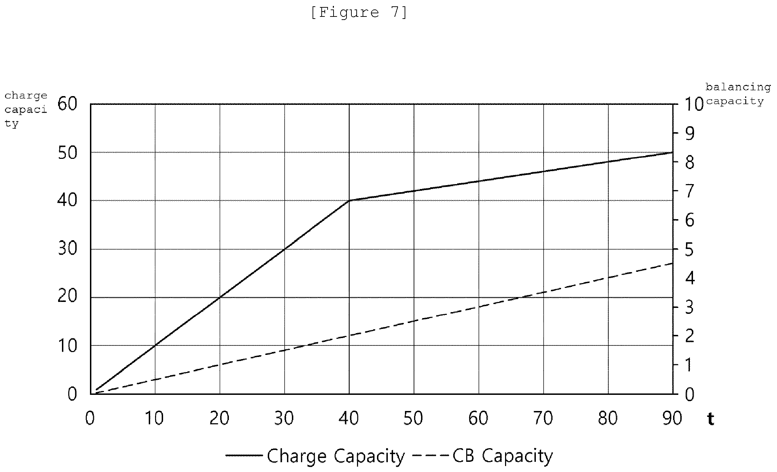

FIG. 7 is a graph showing charging and cell balancing results when charge control according to embodiments of the present invention are applied.

In FIG. 7, the horizontal axis represents time, the left vertical axis represents charging capacity, and the right vertical axis represents cell balancing capacity.

The assumptions applied to the test in FIG. 7 are also the same as those applied to the test in FIG. 6. In other words, it is assumed that the standard charge rate is 1 charging capacity per 1 time unit and 100% charging is equivalent to charging up to capacity 50.

In this test example, control of the charging current is started from the point where the SOC was 80%, and charging is performed by changing the charge rate to 0.2 for 1 time unit using charge current control. Due to the change in charging current, the charging time to the capacity 50 has been increased to 90 time units. In addition, due to the increase in charging time, the cell balancing capacity also increases to capacity of 4.5 at the end of charging, confirming that the balancing capacity increases significantly compared to the results in FIG. 6.

In this way, the balancing effect in one cycle of operation can be maximized by increasing the charging time through charge control according to the embodiments of present invention.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the scope of the present invention described in the appending claims.

## Claims

1. A battery pack comprising:
a plurality of battery cells connected in series; and
a battery management apparatus (100) including a cell balancing module (130) configured to perform balancing of the plurality of battery cells,
wherein the battery management apparatus (100) is configured to, in an instance the cell balancing module (130) is operating, perform charging of the battery pack by limiting a charge current of the battery pack depending on whether a time falls within a charge control activation time range and whether a state of charge of the battery pack is equal to or greater than a preset threshold;
wherein the charge control activation time range is determined as a time range which has a probability that a system to which the battery pack is applied will not be used; and wherein
the battery management apparatus (100) continues charging without current-limitation when the time lies outside said charge control activation time range or the state of charge is below the preset threshold.

2. The battery pack of claim 1, wherein, when the time falls within the charge control activation time range and the state of charge of the battery pack is equal to or greater than the preset threshold, the battery management apparatus (100) performs the charging of the battery pack by limiting the charge current of the battery pack.

3. The battery pack of claim 1, wherein the battery management apparatus (100) is further configured to continue to proceed with performing the charging without limiting the charge current for the battery pack in an instance the time does not fall within the charge control activation time range or the state of charge of the battery pack is less than the preset threshold.

4. The battery pack of claim 1, wherein a newly applied charging speed according to a limited charge current is determined by calculating a time during which the cell balancing module (130) needs to operate in consideration of a voltage deviations among the plurality of cells.

5. The battery pack of claim 1, wherein the cell balancing module (130) includes a passive circuit having a resistor and a switch disposed in each cell of the plurality of cells.

6. A battery management apparatus (100) for a battery pack including a plurality of battery cells connected in series, the apparatus comprising:
a cell balancing module (130) configured to perform cell balancing on the plurality of battery cells;
at least one processor; and
a memory configured to store at least one instruction executed by the at least one processor,
wherein the at least one instruction includes:
an instruction to check whether the battery pack is charging and the cell balancing module (130) has started operating;
an instruction to check whether a time is within a charge control activation time range in an instance the cell balancing module (130) is operating;
an instruction to check whether a state of charge of the battery pack is equal to or greater than a preset threshold in the instance the cell balancing module (130) is operating; and
an instruction to perform charging by limiting a charge current of the battery pack, depending on whether the time falls within the charge control activation time range and whether the state of charge of the battery pack is equal to or greater than the preset threshold;
wherein the charge control activation time range is determined as a time range which has a probability that a system to which the battery pack is applied will not be wherein used; and
the battery management apparatus (100) continues charging without current-limitation when the time lies outside said charge control activation time range or the state of charge is below the preset threshold.

7. The apparatus of claim 6, wherein the instruction to perform the charging by limiting the charge current of the battery pack includes an instruction to perform the charging by limiting the charge current of the battery pack in the instance the time falls within the charge control activation time range and the state of the charge of the battery pack is equal to or greater than the preset threshold.

8. The apparatus of claim 5, wherein the at least one instruction further includes an instruction to continue to proceed with performing the charging without limiting the charge current for the battery pack in an instance the time does not fall within the charge control activation time range or the state of charge of the battery pack is less than the preset threshold.

9. The apparatus of claim 5, wherein a newly applied charging speed according to a limited charge current is determined by calculating a time during which the cell balancing module (130) needs to operate in consideration of a voltage deviations among the plurality of cells.

10. The apparatus of claim 5, wherein the cell balancing module (130) includes a passive circuit having a resistor and a switch disposed in each cell of the plurality of cells.

11. A charge control method of a battery pack including a plurality of battery cells connected in series, the charge control method comprising:
checking (S410, S420) whether the battery pack is charging and a cell balancing module (130) has started operating;
checking (S430) whether a time is within a charge control activation time range in an instance that the cell balancing module (130) is operating;
checking (S450) whether a state of charge of the battery pack is equal to or greater than a preset threshold in the instance that the cell balancing module (130) is operating; and
performing charging (S452) by limiting a charge current of the battery pack, depending on whether the time falls within the charge control activation time range and whether the state of charge of the battery pack is equal to or greater than the preset threshold;
wherein the charge control activation time range is determined as a time range which has a probability that a system to which the battery pack is applied will not be used; and wherein
the battery management apparatus (100) continues charging without current-limitation when the time lies outside said charge control activation time range or the state of charge is below the preset threshold.

12. The charge control method of claim 11, wherein, when the time falls within the charge control activation time range and the state of the charge of the battery pack is equal to or greater than the preset threshold, the charging is performed by limiting the charge current of the battery pack.

13. The charge control method of claim 11, further comprising continuing (S4702) to proceed with performing the charging without limiting the charge current for the battery pack in an instance the time does not fall within the charge control activation time range or the state of charge of the battery pack is less than the preset threshold.

14. The charge control method of claim 11, wherein a newly applied charging speed according to a limited charge current is determined by calculating a time during which the cell balancing module needs to operate in consideration of a voltage deviations among the plurality of cells.

## Patentansprüche

1. Batteriepack, umfassend:
eine Vielzahl von in Reihe geschalteten Batteriezellen; und
eine Batteriemanagementvorrichtung (100), die ein Zellausgleichsmodul (130) enthält, das so konfiguriert ist, dass es einen Ausgleich der Vielzahl von Batteriezellen durchführt,
wobei die Batteriemanagementvorrichtung (100) so konfiguriert ist, dass sie in einem Fall, in dem das Zellausgleichsmodul (130) in Betrieb ist, das Laden des Batteriepacks durch Begrenzen eines Ladestroms des Batteriepacks durchführt, abhängig davon, ob eine Zeit innerhalb eines Zeitbereichs für die Aktivierung der Ladesteuerung liegt und ob ein Ladezustand des Batteriepacks gleich oder größer als ein voreingestellter Schwellenwert ist;
wobei der Zeitbereich für die Aktivierung der Ladesteuerung als ein Zeitbereich bestimmt wird, der eine Wahrscheinlichkeit aufweist, dass ein System, an das der Batteriepack angelegt wird, nicht verwendet wird; und
wobei die Batteriemanagementvorrichtung (100) das Laden ohne Strombegrenzung fortsetzt, wenn die Zeit außerhalb des Zeitbereichs für die Aktivierung der Ladesteuerung liegt oder der Ladezustand unter dem voreingestellten Schwellenwert liegt.

2. Batteriepack nach Anspruch 1, wobei, wenn die Zeit innerhalb des Zeitbereichs für die Aktivierung der Ladesteuerung liegt und der Ladezustand des Batteriepacks gleich oder größer als der voreingestellte Schwellenwert ist, die Batteriemanagementvorrichtung (100) das Laden des Batteriepacks durch Begrenzen des Ladestroms des Batteriepacks durchführt.

3. Batteriepack nach Anspruch 1, wobei die Batteriemanagementvorrichtung (100) ferner so konfiguriert ist, dass sie mit dem Durchführen des Ladens fortfährt, ohne den Ladestrom für den Batteriepack zu begrenzen, in einem Fall, in dem die Zeit nicht innerhalb des Zeitbereichs für die Aktivierung der Ladesteuerung liegt oder der Ladezustand des Batteriepacks geringer als der voreingestellte Schwellenwert ist.

4. Batteriepack nach Anspruch 1, wobei eine neu angewandte Ladegeschwindigkeit gemäß einem begrenzten Ladestrom durch Berechnen einer Zeit bestimmt wird, während der das Zellausgleichsmodul (130) unter Berücksichtigung von Spannungsabweichungen zwischen der Vielzahl von Zellen in Betrieb sein muss.

5. Batteriepack nach Anspruch 1, wobei das Zellausgleichsmodul (130) eine passive Schaltung mit einem Widerstand und einem Schalter enthält, die in jeder Zelle der Vielzahl von Zellen angeordnet sind.

6. Batteriemanagementvorrichtung (100) für einen Batteriepack, der eine Vielzahl von in Reihe geschalteten Batteriezellen enthält, wobei die Vorrichtung umfasst:
ein Zellausgleichsmodul (130), das so konfiguriert ist, dass es einen Zellausgleich an der Vielzahl von Batteriezellen durchführt;
mindestens einen Prozessor; und
einen Speicher, der so konfiguriert ist, dass er mindestens eine Anweisung speichert, die von dem mindestens einen Prozessor ausgeführt wird,
wobei die mindestens eine Anweisung enthält:
eine Anweisung zum Überprüfen, ob der Batteriepack geladen wird und das Zellausgleichsmodul (130) den Betrieb aufgenommen hat;
eine Anweisung zum Überprüfen, ob eine Zeit innerhalb eines Zeitbereichs für die Aktivierung der Ladesteuerung liegt, in einem Fall, in dem das Zellausgleichsmodul (130) in Betrieb ist;
eine Anweisung zum Überprüfen, ob ein Ladezustand des Batteriepacks gleich oder größer als ein voreingestellter Schwellenwert ist, in dem Fall, in dem das Zellausgleichsmodul (130) in Betrieb ist; und
eine Anweisung zum Durchführen des Ladens durch Begrenzen eines Ladestroms des Batteriepacks, abhängig davon, ob die Zeit innerhalb des Zeitbereichs für die Aktivierung der Ladesteuerung liegt und ob der Ladezustand des Batteriepacks gleich oder größer als der voreingestellte Schwellenwert ist;
wobei der Zeitbereich für die Aktivierung der Ladesteuerung als ein Zeitbereich bestimmt wird, der eine Wahrscheinlichkeit aufweist, dass ein System, an das der Batteriepack angelegt wird, nicht verwendet wird; und
wobei die Batteriemanagementvorrichtung (100) das Laden ohne Strombegrenzung fortsetzt, wenn die Zeit außerhalb des Zeitbereichs für die Aktivierung der Ladesteuerung liegt oder der Ladezustand unter dem voreingestellten Schwellenwert liegt.

7. Vorrichtung nach Anspruch 6, wobei die Anweisung zum Durchführen des Ladens durch Begrenzen des Ladestroms des Batteriepacks eine Anweisung zum Durchführen des Ladens durch Begrenzen des Ladestroms des Batteriepacks in dem Fall enthält, dass die Zeit innerhalb des Zeitbereichs für die Aktivierung der Ladesteuerung liegt und der Ladezustand des Batteriepacks gleich oder größer als der voreingestellte Schwellenwert ist.

8. Vorrichtung nach Anspruch 5, wobei die mindestens eine Anweisung ferner eine Anweisung enthält, mit dem Durchführen des Ladens fortzufahren, ohne den Ladestrom für den Batteriepack zu begrenzen, in einem Fall, in dem die Zeit nicht innerhalb des Zeitbereichs für die Aktivierung der Ladesteuerung liegt oder der Ladezustand des Batteriepacks geringer als der voreingestellte Schwellenwert ist.

9. Vorrichtung nach Anspruch 5, wobei eine neu angewandte Ladegeschwindigkeit gemäß einem begrenzten Ladestrom durch Berechnen einer Zeit bestimmt wird, während der das Zellausgleichsmodul (130) unter Berücksichtigung von Spannungsabweichungen zwischen der Vielzahl von Zellen in Betrieb sein muss.

10. Vorrichtung nach Anspruch 5, wobei das Zellausgleichsmodul (130) eine passive Schaltung mit einem Widerstand und einem Schalter enthält, die in jeder Zelle der Vielzahl von Zellen angeordnet sind.

11. Ladesteuerverfahren für einen Batteriepack, der eine Vielzahl von in Reihe geschalteten Batteriezellen enthält, wobei das Ladesteuerverfahren umfasst:
Überprüfen (S410, S420), ob der Batteriepack geladen wird und ein Zellausgleichsmodul (130) den Betrieb aufgenommen hat;
Überprüfen (S430), ob eine Zeit innerhalb eines Zeitbereichs für die Aktivierung der Ladesteuerung liegt, in einem Fall, dass das Zellausgleichsmodul (130) in Betrieb ist;
Überprüfen (S450), ob ein Ladezustand des Batteriepacks gleich oder größer als ein voreingestellter Schwellenwert ist, in dem Fall, dass das Zellausgleichsmodul (130) in Betrieb ist; und
Durchführen des Ladens (S452) durch Begrenzen eines Ladestroms des Batteriepacks, abhängig davon, ob die Zeit innerhalb des Zeitbereichs für die Aktivierung der Ladesteuerung liegt und ob der Ladezustand des Batteriepacks gleich oder größer als der voreingestellte Schwellenwert ist;
wobei der Zeitbereich für die Aktivierung der Ladesteuerung als ein Zeitbereich bestimmt wird, der eine Wahrscheinlichkeit aufweist, dass ein System, an das der Batteriepack angelegt wird, nicht verwendet wird; und
wobei die Batteriemanagementvorrichtung (100) das Laden ohne Strombegrenzung fortsetzt, wenn die Zeit außerhalb des Zeitbereichs für die Aktivierung der Ladesteuerung liegt oder der Ladezustand unter dem voreingestellten Schwellenwert liegt.

12. Ladesteuerverfahren nach Anspruch 11, wobei, wenn die Zeit innerhalb des Zeitbereichs für die Aktivierung der Ladesteuerung liegt und der Ladezustand des Batteriepacks gleich oder größer als der voreingestellte Schwellenwert ist, das Laden durch Begrenzen des Ladestroms des Batteriepacks durchgeführt wird.

13. Ladesteuerverfahren nach Anspruch 11, ferner umfassend das Fortfahren (S4702) des Durchführens des Ladens, ohne den Ladestrom für den Batteriepack zu begrenzen, in einem Fall, in dem die Zeit nicht innerhalb des Zeitbereichs für die Aktivierung der Ladesteuerung liegt oder der Ladezustand des Batteriepacks geringer als der voreingestellte Schwellenwert ist.

14. Ladesteuerverfahren nach Anspruch 11, wobei eine neu angewandte Ladegeschwindigkeit gemäß einem begrenzten Ladestrom durch Berechnen einer Zeit bestimmt wird, während der das Zellausgleichsmodul unter Berücksichtigung von Spannungsabweichungen zwischen der Vielzahl von Zellen in Betrieb sein muss.

## Revendications

1. Un bloc-batterie comprenant :
une pluralité de cellules de batterie connectées en série ; et
un appareil de gestion de batterie (100) incluant un module d'équilibrage de cellules (130) configuré pour effectuer un équilibrage de la pluralité de cellules de batterie,
dans lequel l'appareil de gestion de batterie (100) est configuré pour, dans un cas où le module d'équilibrage de cellules (130) fonctionne, effectuer la charge du bloc-batterie en limitant un courant de charge du bloc-batterie en fonction du fait qu'un temps se situe dans une plage de temps d'activation de commande de charge et du fait qu'un état de charge du bloc-batterie est supérieur ou égal à un seuil prédéfini ;
dans lequel la plage de temps d'activation de commande de charge est déterminée comme une plage de temps qui a une probabilité qu'un système auquel le bloc-batterie est appliqué ne sera pas utilisé ; et
dans lequel l'appareil de gestion de batterie (100) poursuit la charge sans limitation de courant lorsque le temps se situe en dehors de ladite plage de temps d'activation de commande de charge ou que l'état de charge est inférieur au seuil prédéfini.

2. Le bloc-batterie selon la revendication 1, dans lequel, lorsque le temps se situe dans la plage de temps d'activation de commande de charge et que l'état de charge du bloc-batterie est supérieur ou égal au seuil prédéfini, l'appareil de gestion de batterie (100) effectue la charge du bloc-batterie en limitant le courant de charge du bloc-batterie.

3. Le bloc-batterie selon la revendication 1, dans lequel l'appareil de gestion de batterie (100) est en outre configuré pour continuer à procéder à l'exécution de la charge sans limiter le courant de charge pour le bloc-batterie dans un cas où le temps ne se situe pas dans la plage de temps d'activation de commande de charge ou l'état de charge du bloc-batterie est inférieur au seuil prédéfini.

4. Le bloc-batterie selon la revendication 1, dans lequel une vitesse de charge nouvellement appliquée selon un courant de charge limité est déterminée en calculant un temps pendant lequel le module d'équilibrage de cellules (130) doit fonctionner en tenant compte d'écarts de tension parmi la pluralité de cellules.

5. Le bloc-batterie selon la revendication 1, dans lequel le module d'équilibrage de cellules (130) inclut un circuit passif ayant une résistance et un commutateur disposés dans chaque cellule de la pluralité de cellules.

6. Un appareil de gestion de batterie (100) pour un bloc-batterie incluant une pluralité de cellules de batterie connectées en série, l'appareil comprenant :
un module d'équilibrage de cellules (130) configuré pour effectuer un équilibrage de cellules sur la pluralité de cellules de batterie ;
au moins un processeur ; et
une mémoire configurée pour stocker au moins une instruction exécutée par l'au moins un processeur,
dans lequel l'au moins une instruction inclut :
une instruction pour vérifier si le bloc-batterie est en charge et si le module d'équilibrage de cellules (130) a commencé à fonctionner ;
une instruction pour vérifier si un temps se situe dans une plage de temps d'activation de commande de charge dans un cas où le module d'équilibrage de cellules (130) fonctionne ;
une instruction pour vérifier si un état de charge du bloc-batterie est supérieur ou égal à un seuil prédéfini dans le cas où le module d'équilibrage de cellules (130) fonctionne ; et
une instruction pour effectuer la charge en limitant un courant de charge du bloc-batterie, en fonction du fait que le temps se situe dans la plage de temps d'activation de commande de charge et du fait que l'état de charge du bloc-batterie est supérieur ou égal au seuil prédéfini ;
dans lequel la plage de temps d'activation de commande de charge est déterminée comme une plage de temps qui a une probabilité qu'un système auquel le bloc-batterie est appliqué ne sera pas utilisé ; et
dans lequel l'appareil de gestion de batterie (100) poursuit la charge sans limitation de courant lorsque le temps se situe en dehors de ladite plage de temps d'activation de commande de charge ou que l'état de charge est inférieur au seuil prédéfini.

7. L'appareil selon la revendication 6, dans lequel l'instruction pour effectuer la charge en limitant le courant de charge du bloc-batterie inclut une instruction pour effectuer la charge en limitant le courant de charge du bloc-batterie dans le cas où le temps se situe dans la plage de temps d'activation de commande de charge et l'état de charge du bloc-batterie est supérieur ou égal au seuil prédéfini.

8. L'appareil selon la revendication 5, dans lequel l'au moins une instruction inclut en outre une instruction pour continuer à procéder à l'exécution de la charge sans limiter le courant de charge pour le bloc-batterie dans un cas où le temps ne se situe pas dans la plage de temps d'activation de commande de charge ou l'état de charge du bloc-batterie est inférieur au seuil prédéfini.

9. L'appareil selon la revendication 5, dans lequel une vitesse de charge nouvellement appliquée selon un courant de charge limité est déterminée en calculant un temps pendant lequel le module d'équilibrage de cellules (130) doit fonctionner en tenant compte d'écarts de tension parmi la pluralité de cellules.

10. L'appareil selon la revendication 5, dans lequel le module d'équilibrage de cellules (130) inclut un circuit passif ayant une résistance et un commutateur disposés dans chaque cellule de la pluralité de cellules.

11. Un procédé de commande de charge d'un bloc-batterie incluant une pluralité de cellules de batterie connectées en série, le procédé de commande de charge comprenant :
vérifier (S410, S420) si le bloc-batterie est en charge et si un module d'équilibrage de cellules (130) a commencé à fonctionner ;
vérifier (S430) si un temps se situe dans une plage de temps d'activation de commande de charge dans un cas où le module d'équilibrage de cellules (130) fonctionne ;
vérifier (S450) si un état de charge du bloc-batterie est supérieur ou égal à un seuil prédéfini dans le cas où le module d'équilibrage de cellules (130) fonctionne ; et
exécuter la charge (S452) en limitant un courant de charge du bloc-batterie, en fonction du fait que le temps se situe dans la plage de temps d'activation de commande de charge et du fait que l'état de charge du bloc-batterie est supérieur ou égal au seuil prédéfini ;
dans lequel la plage de temps d'activation de commande de charge est déterminée comme une plage de temps qui a une probabilité qu'un système auquel le bloc-batterie est appliqué ne sera pas utilisé ; et
dans lequel l'appareil de gestion de batterie (100) poursuit la charge sans limitation de courant lorsque le temps se situe en dehors de ladite plage de temps d'activation de commande de charge ou que l'état de charge est inférieur au seuil prédéfini.

12. Le procédé de commande de charge selon la revendication 11, dans lequel, lorsque le temps se situe dans la plage de temps d'activation de commande de charge et que l'état de charge du bloc-batterie est supérieur ou égal au seuil prédéfini, la charge est effectuée en limitant le courant de charge du bloc-batterie.

13. Le procédé de commande de charge selon la revendication 11, comprenant en outre poursuivre (S4702) pour procéder à l'exécution de la charge sans limiter le courant de charge pour le bloc-batterie dans un cas où le temps ne se situe pas dans la plage de temps d'activation de commande de charge ou l'état de charge du bloc-batterie est inférieur au seuil prédéfini.

14. Le procédé de commande de charge selon la revendication 11, dans lequel une vitesse de charge nouvellement appliquée selon un courant de charge limité est déterminée en calculant un temps pendant lequel le module d'équilibrage de cellules doit fonctionner en tenant compte d'écarts de tension parmi la pluralité de cellules.
